# EUROPEAN PATENT SPECIFICATION

(11) **EP 1 439 018 B1**
(45) Date of publication and mention of the grant of the patent: **03.06.2015**
(21) Application number: 04250222.9
(22) Date of filing: 16.01.2004
(51) Int. Cl.: B23B 5/02, B23B 27/14, B60B 3/02, C25D 5/02, C25D 5/44, C25D 7/00, C25D 11/38

(54) **Process for the production of a decorative chrome-plated surface of a wheel**
Verfahren zur Herstellung einer chromplattierten, dekorativen Oberfläche eines Rads
Procédé de fabrication d'une surface décorative plaquée au chrome d'une roue

(30) Priority: 17.01.2003 US 440914 P; 26.02.2003 US 450013 P
(43) Date of publication of application: 21.07.2004
(73) Proprietor: Hayes Lemmerz International, Inc., Northville, MI 48167 (US)
(72) Inventor: Gatton, Geoffrey L., Farmington Michigan 48336 (US); Guernsey, Richard T., Evansville Indiana 47725 (US)
(74) Representative: Giles, Ashley Simon

(56) References cited:
- EP-A- 1 211 025
- WO-A-01/32339
- WO-A-98/41360
- DE-A- 3 118 266
- DE-A- 10 034 228
- GB-A- 2 339 713
- US-A- 4 929 315
- US-A- 5 099 558
- US-A- 5 728 426
- US-A- 5 803 553
- PATENT ABSTRACTS OF JAPAN vol. 2000, no. 08, 6 October 2000 (2000-10-06) -& JP 2000 127702 A (TOPY IND LTD), 9 May 2000 (2000-05-09)
- PATENT ABSTRACTS OF JAPAN vol. 1996, no. 09, 30 September 1996 (1996-09-30) -& JP 08 118104 A (ENKEI AUTOMOT KK), 14 May 1996 (1996-05-14)

## Description

### Background of Invention

This invention relates in general to vehicle wheels and in particular to a method and cutting tool for machining a portion of the vehicle wheel outboard face to produce a smooth surface and then chrome plating the smooth surface.

Vehicle wheels typically include an annular wheel rim and a circular wheel disc. The wheel disc can be formed across the outboard end of the wheel rim or recessed within the wheel rim. The wheel rim is adapted to carry a pneumatically inflated tire. The wheel rim has inboard and outboard tire retaining flanges formed on the ends thereof which extend in an outward radial direction to retain the tire on the wheel. Inboard and outboard tire bead seats are formed on the outer surface of the wheel rim adjacent to the corresponding tire retaining flange to support the tire wall beads and form an air-tight seal therewith. The wheel rim also includes a reduced diameter deep well between the tire bead seats to facilitate mounting the tire upon the wheel.

The wheel disc includes a central wheel hub for mounting the wheel upon a vehicle. The inboard face of the wheel disc hub is typically machined to form a flat surface to assure good contact between the wheel disc and the vehicle wheel hub. A pilot hole and a plurality of wheel stud holes extend through the wheel hub. The pilot hole is centered on the hub and the stud holes are spaced equally about a bolt hole circle which is concentric with the pilot hole. The pilot hole can receive the end of an axle while the wheel stud holes receive wheel studs for attaching the wheel to the vehicle. The wheel disc also typically includes a plurality of wheel spokes which extend radially from the wheel hub to the wheel rim and support the hub within the rim.

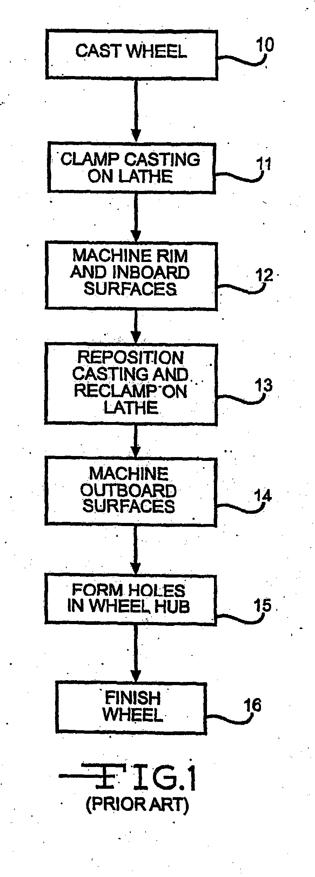

Referring now to the drawings, a flow chart for a wheel manufacturing process is shown in Fig. 1. In functional block 10, a wheel is cast in a single piece from a light weight metal such as aluminum, magnesium or titanium, or an alloy of a light weight metal. Such wheels are becoming increasingly popular because they weigh less than conventional steel wheels and can include outboard wheel disc faces which are formed in a pleasing aesthetic shape. One piece wheel castings are usually formed by a gravity or low pressure casting process. The wheel castings are finished by machining to a final shape.

Two separate machining stations are typically used to finish a wheel casting. In functional block 11, the outboard end of a rough wheel casting is clamped to the face of a first wheel lathe for a first set of machining operations. A wheel lathe is a dedicated machine designed to finish wheels. Wheel lathes typically include a plurality of cutting tools mounted upon a lathe turret. The turret is indexed to sequentially move each of the tools to the surface of the wheel casting. Wheel lathes are usually operated under Computer Numerical Control (CNC) to sequentially perform a number of related machining operations. For example, a wheel lathe turret can be equipped with a turning tool, a facing tool and a drill bit and the wheel lathe can be programmed to sequentially turn, face and bore a wheel casting. The wheel lathe face typically includes a chuck having a plurality of jaws which grip the outboard wheel retaining flange and tire bead seat. Consequently, the outboard wheel rim end is not finished during the first set of machining operations.

The outside and inside surfaces of the wheel rim are turned to their final shapes and the inboard surface of the wheel hub is faced in functional block 12. Additionally, the inboard end of the wheel rim is finished. The partially finished wheel casting is removed from the first wheel lathe, reversed and clamped on a second wheel lathe for a second set of machining operations in functional block 13. During the second set of machining operations, the inboard wheel flange and tire bead seat are gripped in the jaws of the wheel lathe chuck, exposing the outboard surface of the wheel disc and the outboard end of the wheel rim for machining.

In functional block 14, the second wheel lathe turns and faces the outboard wheel face. During these operations, the outboard tire retaining flange and the outboard tire bead seat also are turned to final shapes. The surface of the hubcap retention area is machined to final shape and the stud mounting holes are drilled through the hub in functional block 15. Alternately, the wheel casting may be removed from the wheel lathe and the drilling operation completed at another work station.

During the facing and other machining operations, very fine grooves are formed in the surfaces of the wheel. Accordingly, the surface of the wheel is typically subjected to a finishing step, as shown in functional block 16. A typical finishing process involves polishing the wheel surface to smooth the grooves and provide a lustrous appearance to the surface of the wheel. The polishing is usually followed by application of a clear coating to protect the polished wheel surface.

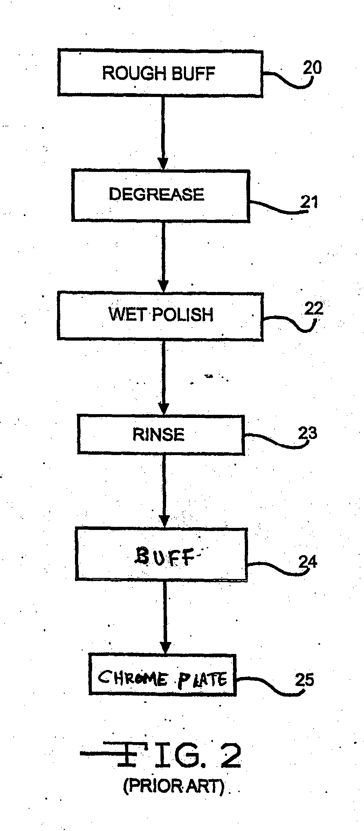

A typical polishing and chrome plating operation is illustrated by a flow chart in Fig. 2. Polishing typically involves a first step of rough buffing with an abrasive compound as shown in functional block 20. The buffed wheel is degreased in functional block 21. One frequently used method of degreasing involves passing the wheel through a chamber which is filled with a solvent vapor. The solvent vapor condenses upon wheel, covering the entire wheel surface. Once the solvent has had a sufficient time to dissolve any surface grease, the solvent is washed from the wheel to complete the degreasing. As shown in functional block 22, the wheel is then wet polished with a liquid lubricant for the polishing abrasive. The wheel is usually rotated and rotating polishing wheels are applied to the surface while a slurry of polishing abrasive and a carrier fluid is applied to the wheel surface. Next the wheel is rinsed in functional block 23. Typically, deionized water is used for the rinse.

The substances utilized during wheel polishing are generally toxic in nature. Accordingly, it is common practice to ship the wheels to a polishing contractor who employs safety procedures to protect personnel. The contractor is also equipped to dispose of the toxic wastes generated by the polishing operations.

The polished wheel surface is buffed in functional block 24. Typically, the buffing step utilizes a rag and buffing compound to create a surface smooth and shiny enough to achieve the generally accepted smoothness and clarity required for chrome plating an aluminum wheel. Finally, a layer of chrome plating is applied to the wheel in functional block 25. The chrome plating may be provided at the polishing facility, or the wheel may be shipped to a chrome plater.

EP 1211025 A2 discloses a tool and a process for smoothing a wheel surface. In particular this document discloses a process for forming a decorative surface upon the outboard surface of a wheel disc, the method comprising the steps of:
(a) providing a cutting tool for smoothing a wheel surface that includes a rhombic shaped body portion having a mounting aperture formed therethrough and an insert having a cutting tip carried upon one end of the body portion, the insert having arcuate leading and trailing edges, the insert also having a zero degree land formed thereabout whereby the cutting edge of the insert is maintained tangent to the wheel surface;
(b) mounting a machined vehicle wheel including a wheel rim and having a wheel disc extending radially across the wheel rim in a lathe;
(c) rotating the wheel; and
(d) urging the cutting tool provided in step (a) against an outboard surface of the wheel disc and traversing the cutting tool in a radial direction across the outboard surface of the wheel disc to smooth at least a portion of the outboard wheel disc surface such that the smooth portion of the wheel disc outboard surface has a polished appearance.

The cutting tool of EP 1 211 025 A2 has a polycrystalline insert, in which the radius of the leading edge of the tip is larger than the radius of the trailing edge. According to EP 1 211 025 A2, the wheel is subsequently coated with a protective clear coating.

### Summary of Invention

This invention relates to a process or method, having the features of claim 1 or claim 12 below, for machining a portion of an outboard wheel face to produce a smooth surface and then chrome plating the smooth surface. Preferred features are set out in the sub-claims.

As described above, it is known to polish and buff an aluminum wheel surface prior to chrome plating. However; such processes require abrasives and solvents. The polishing and buffing can create slight waves or subtle uniform variations in the polished surface due to harmonic oscillations of the power equipment used and differing amounts of work pressure exerted on the surface due to different elevations of the geometric designs of the wheel surface. When polishing and buffing is done by hand, the variations are more random due to fatigue of the human muscles and the inability to make exact dimensional repeated motions. Thus, conventional polishing and buffing methods are known to produce a slightly distorted reflection that is similar to looking through an antique glass pane that has experienced some flow of its molecular structure. Such flow can cause a certain amount of refraction or deflection of the light rays passing through the glass. Therefore, it would be desirable to provide a process for smoothing a wheel surface that does not require conventional polishing and buffing.

Furthermore, typical solvents include trichloroethylene, trichloroethane, sulfuric acid and perchloroethylene, which are toxic. Additionally, the lubricants for the abrasives can include animal lubricants such as grease and lard. The polishing wheels can produce air-borne lint during the polishing and buffing operation. Accordingly, it is necessary to protect the workers from these materials and collect and dispose of the residues. Because of the complexity of the polishing operations and the need to appropriately control the environmental impact of the materials utilized, wheels are often shipped to an outside contractor for polishing. This involves additional time and expense. Thus, it would be desirable to smooth the wheel face without polishing the wheel.

The present invention includes a process for forming a decorative surface upon a vehicle wheel face which comprises providing a machined vehicle wheel including a wheel rim and having a wheel disc extending radially across the wheel rim. The machined wheel is mounted in a lathe. The wheel is rotated while an improved cutting tool having a hardened tip is urged with a uniform cutting pressure against the outboard surface of the wheel disc to smooth at least a portion of the wheel disc surface. The hardened tip is formed upon an insert of mono crystalline material that is mounted on one end of the cutting tool. The invention also contemplates smoothing the entire outboard face of the wheel disc. Subsequent to smoothing the wheel face, the smoothed portion of wheel face is chrome plated.

Various objects and advantages of this invention will become apparent to those skilled in the art from the following detailed description of the preferred embodiment, when read in light of the accompanying drawings.

### Brief Description of Drawings

Fig. 1 is is a flow chart for a known process for manufacturing a one piece vehicle wheel.

Fig. 2 is a flow chart for a known process for polishing and chrome plating a one piece vehicle wheel.

Fig. 3 is a sectional view of a vehicle wheel and illustrates a process for finishing the vehicle wheel face using a tool, which is not in accordance with the invention.

Fig. 4 is a plan view of a wheel surface finishing tool that is used in the finishing process illustrated in Fig. 3.

Fig. 5 is a side elevation of the surface finishing tool shown in Fig. 4.

Fig. 6 is an enlarged partial side elevation of the tool shown in Fig. 5.

Fig. 7 is a flow chart for manufacturing a one piece vehicle wheel which utilizes the surface finishing process illustrated in Fig. 3.

Fig. 8 is a flow chart for an alternate embodiment of the manufacturing process shown in Fig. 7.

Fig. 9 is a flow chart for another manufacturing process, which is not in accordance with the invention.

Fig. 10 is an embodiment of the wheel surface finishing tool shown in Fig. 4, which is in accordance with the invention.

Fig. 11 is a side elevation of the surface finishing tool shown in Fig. 10.

### Detailed Description

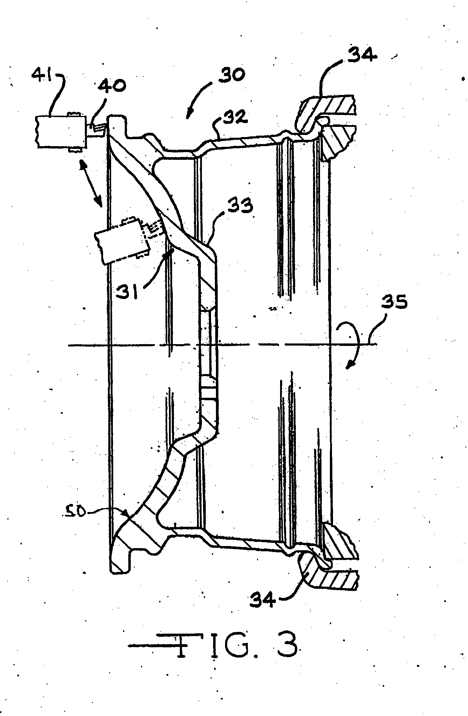

Referring again to the drawings, there is illustrated in Fig. 3, a sectional view of a one piece wheel 30 having an outboard surface 31 and a process for finishing the wheel 30 in accordance with the present invention. The finishing involves cutting the wheel surface 31 with an improved cutting tool having a geometry that will be described below. An increased brightness or shine of the wheel surface is expected from the cutting process. Thus, the present invention is directed to smoothing the visible portions of a wheel face to cosmetically improve the appearance of the wheel face.

As shown in Fig. 3, the wheel 30 includes an annular wheel rim 32. A wheel disc 33 which includes the outboard surface 31 extends radially across the outboard end of the wheel rim 32. The process for finishing the wheel face contemplates mounting an inboard end of the wheel rim 32 in the jaws 34 of a lathe or a spinner chuck of a wheel lathe (not shown).

The wheel 30 is rotated about an axis 35, as shown by the arrow in Fig. 3, by the wheel lathe. A cutting tool 40 is mounted upon a tool holder 41 that is secured to a wheel lathe turret (not shown). The wheel lathe urges the cutting tool 40 against the outboard wheel face 31 with uniform or equalized cutting pressure to simultaneously remove material from the wheel face 31 and smooth the cut surface. In the preferred embodiment, programmable machine tools are utilized to assure that the cutting pressure is equalized for all elevations of the geometric shape of the wheel being finished. The tool 40 is traversed in a radial direction from the outboard end of the wheel rim 32 across the wheel face 31. The tool 40 moves alternately toward and away from the center of the wheel disc 33, as shown by the small arrows in Fig. 3. As the tool 40 moves across the wheel face 31, the tool 40 also is moved axially to follow the contour of the wheel face 31. The process further contemplates that the cutting tool 40 can be inclined to smooth all possible inclinations of the wheel face 31, such as horizontal, vertical or inclined, as illustrated in phantom in Fig. 3. Additionally, the tool 40 can be advanced in an axial, or radial, direction to increase the amount of material removed from the wheel face 31. Liquid coolant is applied to the working surface by a conventional supply means (not shown). As will be described below, a portion of the surface of the wheel face 31 is melted and then resolidified as the tool 40 passes thereover to form a smoothed portion of the wheel face 31.

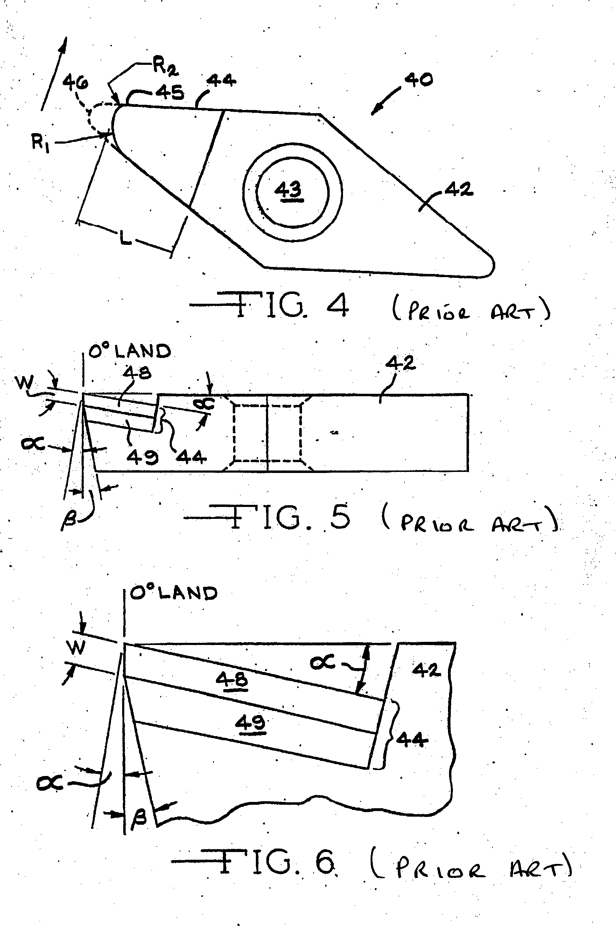

As shown in Figs. 4 and 5, the cutting tool 40 is a specially modified face cutting tool. The tool 40 has a rhombic shaped body 42 having a bore 43 formed therethrough which receives a fastener (not shown) for securing the tool to the tool holder 41. The tool 40 is formed from a sintered carbide steel and includes an insert 44 insert attached to one end. The insert 44 is formed from a poly crystalline material which may be either naturally occurring or synthetically produced. The insert 44 is formed from a Poly Crystalline Diamond (PCD) material. The insert 44 includes an cutting tip 45 on one end that contacts the wheel face 31 and works the metal. The arrow in the upper left portion of Fig. 4 indicates the direction of movement of the worked metal relative to the cutting tool 40. The insert 44 has a length L of about six mm.

The process contemplates a special geometry for the cutting tip 45, which does not fall under the scope of the claims. For comparison, a standard cutting tip is outlined by the dashed line labeled 46 in Fig. 4. While the standard cutting tip 46 is symmetrical about the centerline of the tool, the cutting tip 45 of the tool 40 used in the finishing process is non-symmetrical, having two different radii. The leading edge of the tip 45 has a larger radius R₁ while the trailing edge of the tip 45 has a smaller radius R₂.
Both radii R₁ and R₂ are perpendicular to the centerline of the tool 40. The leading edge radius R₁ is twice the trailing edge radius R₂. Additionally, the leading edge radius R₁ is selected to be greater that the rate of feed per revolution programmed into the wheel lathe to cause multiple cutting of the wheel surface prior to the tangent point of the tip 45. In the preferred embodiment, the leading edge radius R₁ is 3.01 mm while the trailing edge radius R₂ is 1.5 mm. These radii compare to a typical standard cutting tip radius of 1.0 mm. The direction of movement of the wheel being worked is indicated by the arrow in Fig. 4.

As best seen in Figs. 5 and 6, the insert 44 is canted at an angle α relative to the top surface of the tool body 42. The angle α is seven degrees. A flat land 48 is formed around the upper edge of the insert 44. The land 48 is perpendicular to the top surface of the tool body 42. Because the insert 44 is canted relative to the tool body 42, the cutting edge of the insert 44 also forms an angle of α with the tool body top surface. Thus, the cutting edge of the insert 44 is maintained tangent to the surface of the face of the vehicle wheel. The land 48 has a width W that is in the range of between 0.076 and 0.254 mm with the preferred embodiment having a width in the range of 0.076 to 0.127 mm. The lower portion 49 of the insert 44 and the tool body 42 are undercut at an angle β to allow removal of the cut material. The angle β is in the range of five to 15 degrees and is preferably five degrees.

The tool holder 41 is of conventional design but is formed of an anti-vibration material, such as, for example, machinable carbide to minimize vibration by avoiding resonance. Also, the tool holder 41 is designed for a minimum extension from the wheel lathe turret to increase the rigidity of the smear cutting tool 40. Additionally, it is contemplated that the associated wheel lathe includes a balanced chuck, centering, locating and clamping mechanisms.

During operation, the zero rake land of the insert tip 44 rubs the wheel surface causing "work hardening" of the wheel metal. This differs from a process commonly referred to as "smear cutting" where a tool is dragged in a "backward" direction over the workpiece to only smooth the surface. The process contemplates advancing the tool 40 in a "forward" direction. The geometry of the cutting tool tip 45 simultaneously removes material from the wheel face and smoothes the wheel face. Preferably, the depth of material removed by the tool 40 is within the range of 0.05 mm to 0.1 mm. The friction between the tool tip 45 and the wheel surface generates sufficient heat to cause microscopic melting of the surface metal. The friction between the tool tip 45 and the wheel surface forces a small amount of the melted metal in front of the tip 45 and into any surface voids. The melted surface metal then resolidifies. The melting and resolidification of the metal can leave a bright surface that appears to have been polished.

The inventors believe that as a wheel solidifies following casting, a layer of oxidized metal is formed upon the surface of the wheel. The oxidized layer is melted and quickly resolidifed during the cutting process with the cutting tool 40. As a result, an oxidized layer does not have a chance to be formed. A similar process is utilized to provide a lustrous surface finish to gold ingots. As a gold ingot solidifies, the exterior surface becomes dull due to slight oxidation of the gold on the surface and impurities rising to the surface. A torch is used to heat and remelt the surface of the ingot to a semi-liquid state. The torch is quickly removed as soon as the ingot surface becomes shiny. This process for gold ingots is typically referred to as tinning. The inventors have found that if the feedrate for the cutting tool 40 is one tenth or less than the leading edge radius R₁, the surface appears to have been polished. The finishing process also seals any pores that could allow air to escape from a pneumatic tire mounted upon the wheel. Accordingly, the inventors expect that the number of "leakers" will be reduced.

The process further contemplates applying a layer of chrome plating 50 to the wheel disc face following the work hardening process. The layer of chrome plating 50 covers the smoothed portion of the wheel and provides an esthetically pleasing appearance. The inventors have found that the smoothing of the wheel surface described above eliminates the harmonically distorted pressures experienced with conventional polishing and buffing processes. Additionally, there is minimal wave effect in the wheel surface and the geometric edges of the wheel face are not rounded or softened by the abrasive effects of conventional polishing and buffing operations. The inventors have found that use of the present invention results an a clarity of the surface of the aluminum chrome plated wheel that is at a level comparable to a surgical reflective mirror or a cosmetic mirror such as used in a compact or powder room.

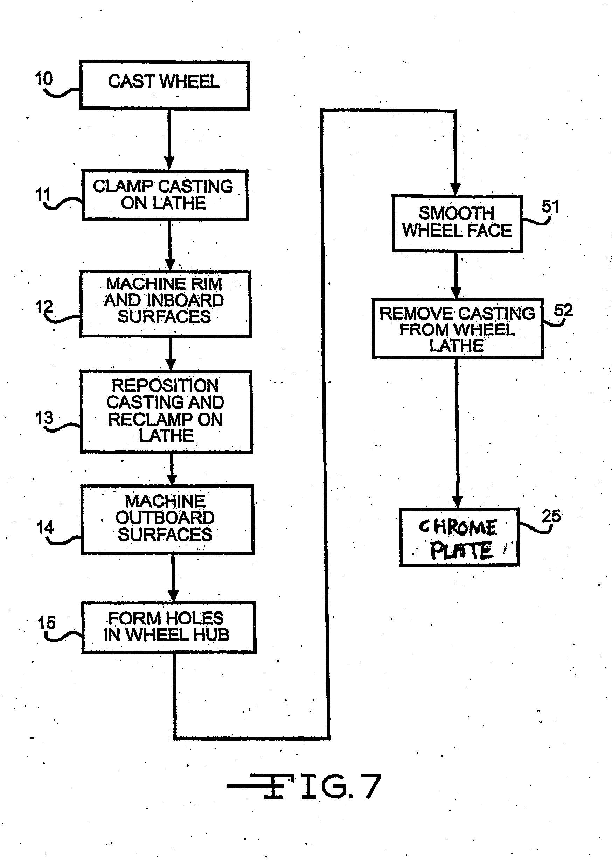

The invention contemplates a process for smoothing the wheel face that is illustrated by the flow chart shown in Fig. 7. Steps shown in Fig. 7 which are similar to steps shown in the flow charts in Figs. 1 and 2 and have the same numerical designators. In Fig. 7, a vehicle wheel is cast by a conventional casting process, such as, for example, gravity or low pressure casting, in functional block 10. In functional blocks 11 through 15, the wheel casting is machined to a final shape as described above; however, a small amount of material is left for a final finishing cut with the special tool 60 described below.

In functional block 51, the outboard wheel face is smoothed on a wheel lathe or other conventional wheel finishing machine with a final finishing cut. The wheel is rotated upon the wheel lathe while a cutting tool having the unique geometry described above is urged against the outboard wheel face with a uniform cutting pressure while also being moved radially across the outboard wheel face. In the preferred embodiment, the depth of material removed by the tool 40 is within the range of 0.05 mm to 0.1 mm. Once the desired surface dimensions and finish have been achieved, the wheel is removed from the wheel lathe in functional block 52.

The wheel surface is then finished with one or more chrome plated layers deposited by a conventional chrome plating process in functional block 25. The present invention contemplates that smoothing is included as one of the steps in the prior art process for machining a wheel casting. For example, a cutting tool mounted upon a tool holder formed from an anti-vibration material can be added to the turret of the wheel lathe used to machine the wheel casting and the smoothing operation included as one of the programmed machining steps for finishing the wheel casting. Alternately, a smoothing station, which is dedicated to smoothing the wheel faces, can be established at the wheel manufacturing facility.

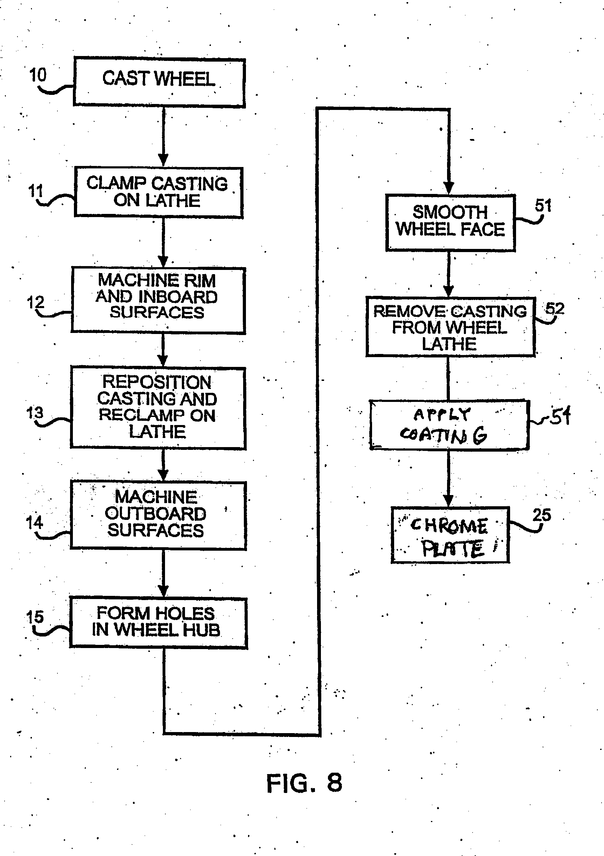

While the preferred embodiment has been described and illustrated above as smoothing the entire outboard wheel face, it will be appreciated that only a portion of the wheel face can be smoothed. For example, the esthetic design of the wheel may require that only a portion of the wheel face is to be chrome plated with the remainder remaining as machined or painted. Accordingly, an alternate embodiment of the manufacturing process described above is illustrated by the flow chart shown in Fig. 8. As before, blocks shown in Fig. 8 that are similar to blocks shown in preceding figures have the same numerical designators. In Fig. 8, only the portion which is desired to be chrome plated is smoothed in functional block 51 by a final finishing cut with the special tool 60. Therefore, the portions of the wheel surface that are not to be chrome plated are machined to their final dimensions in functional block 14. As before, the wheel is removed from the wheel lathe in functional block 52. An electrically non-conductive coating is applied to the non-smoothed portions of the wheel in functional block 54. In the preferred embodiment, the portions of the wheel surface that were smoothed in functional block 51 are masked before the coating is applied. For example, the portions of the wheel surface adjacent to the windows formed between the wheel spokes may be coated while the remainder of the wheel face is chrome plated. Also in the preferred embodiment, the coating is a paint that includes pigment to add color to the coated area. Alternately, the wheel surface can be covered with a clear coating or the coating may include both a layer of paint and a layer of clear coat that covers the paint. It is further contemplated that the coating may include an inert ingredient to further enhance the appearance of the wheel. In the preferred embodiment, the coating is sprayed onto the wheel surface and then cured. Once the coating has cured, the masking material is removed. Alternately, a spraying mask may be used to in place of masking material to control the application of the coating to the wheel surface. Finally, in functional block 25, the wheel is chrome plated by a conventional process, such as by electrolysis with immersion in a tank. Upon immersion, the electrically non-conductive coating prevents adhesion of the chrome plating chemicals. Instead, the chrome plating chemicals only adhere to the bare metal portions of the wheel surface.

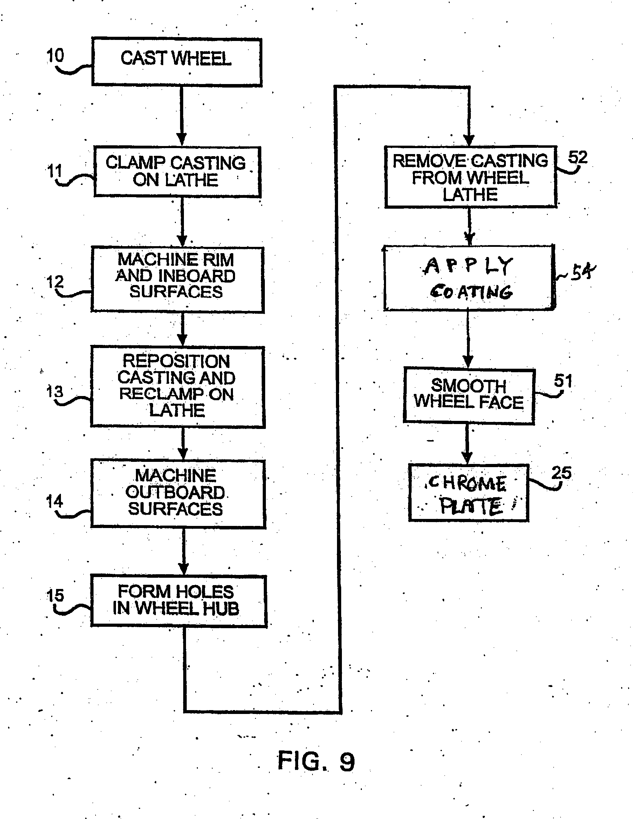

Another alternate manufacturing process, which is not in accordance with the invention is illustrated in Fig. 9, where, as before, blocks that are similar to blocks shown in preceding figures have the same numerical designators. In Fig. 9, the coating is applied to the wheel in functional block 54 before the portions of the wheel face are smoothed with the special tool 40 in functional block 54. In the preferred embodiment, the entire wheel face is coated in functional block 54. Then, when the portions of the wheel surface to be chrome plated are smoothed by the special tool 40 in functional block 51, the tool 40 removes the coating from the portions of the face of the wheel to be chrome plated as it smoothes them. Thus, it is not necessary to mask portions of the wheel. As before, an electrically non-conductive material is sprayed onto the wheel face in functional block 54 and then cured. As described above, the coating material can be a paint that includes pigment, a clear coat or multiple layers of paint and clear coat. Additionally , an inert ingredient may be added to the coating material to further enhance the appearance of the wheel. Alternately, as described above, masking material or a spray mask can be used to restrict the coating material to only the portions of the wheel surface that are not to be chrome plated. Once the coating is cured, the portions of the wheel face that are to be chrome plated are smoothed in functional block 51 by a final finishing cut with the special tool 40. Then, in functional block 25, the wheel is chrome plated by a conventional process, such as by electrolysis with immersion in a tank. Upon immersion, the electrically non-conductive coating prevents adhesion of the chrome plating chemicals. Instead, the chrome plating chemicals only adhere to the bare metal portions of the wheel surface.

The invention also contemplates that the entire surface of wheel can be smoothed to provide an improvement in the cosmetic appearance to the wheel. Also, while the preferred embodiment has been described as being applied to cast wheels, it will be appreciated that the cosmetic appearance of wheels formed by other conventional processes also can be improved by application of the present invention. For example, the present invention also contemplates smoothing the outboard surface of forged or stamped wheel discs. Additionally, while the preferred embodiment has been illustrated and described for aluminum or aluminum alloy wheels, it will be appreciated that the invention also may be practiced on wheels formed from other metals and alloys of other metals. Finally, a layer of clear coat may be optionally applied to the chrome plated surface (not shown).

The inventors expect that using an improved cutting tool to cut and smooth the wheel face to enhance the cosmetic appearance thereof will cost less than buffing or polishing of the wheel face. Also, because the wheel can be smoothed on existing wheel lathes, no capital cost for polishing machines is required. The smoothing process eliminates both the exposure of personnel to toxic substances utilized during polishing and the expense of disposing of the toxic wastes generated thereby. Production time and cost will also be reduced since the need to ship the wheel to a polishing contractor will be eliminated. The improved cutting tool can extend into the wheel rim to reach the surface of a recessed wheel disc, which can be difficult to reach with polishing wheels. The cutting and smoothing preserves crisp edge surfaces which may be aesthetically desirable. Such edges tend to be blunted or removed by the abrasive nature of the polishing process. While polishing tends to highlight surface imperfections, cutting and smoothing tends to hide such surface imperfections. Finally, as described above, the present invention results in a significantly improved surface appearance and a greatly enhanced appearance of any chrome plating applied over the smoothed surface.

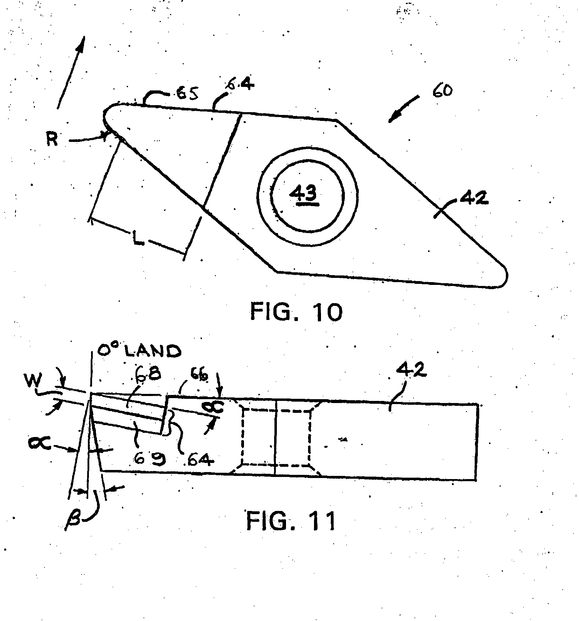

The invention contemplates an embodiment of the special smoothing tool that is illustrated generally at 60 in Figs. 10 and 11, which is used in place of the cutting tool of figures 4 to 6 in methods, which are in accordance with the invention. Components shown in Figs. 10 and 11 that are the same as components shown in previous figures have the same numerical identifiers. The tool 60 has a rhombic shaped body 42 having a bore 43 formed therethrough which receives a fastener (not shown) for securing the tool to the tool holder 41. The tool 60 is formed from a sintered carbide steel and includes an insert 64 attached to one end. The insert 64 is formed from a mono crystalline material which may be either naturally occurring or synthetically produced. In the preferred embodiment, the insert 64 is formed from a Single Crystalline Diamond (SCD) material. The insert 64 includes an improved cutting tip 65 on one end that contacts the wheel face 31 and works the metal. The arrow in the upper left portion of Fig. 10 indicates the direction of movement of the worked metal, or the wheel, relative to the smoothing tool 40. As before, the insert 64 has a length L of about six mm.

Use of a mono crystalline insert 64 in place of the poly crystalline insert 44 described above significantly reduces the cost or the insert. Additionally, the use of a mono crystalline material allows a cutting tip 65 that is symmetrical about the centerline of the tool. In the preferred embodiment, the radius of the cutting tip, R, is formed in a ratio to the length of the tool 60 of about 1 to 16.

As best seen in Fig. 11, the insert 64 is canted at an angle α relative to the top surface 66 of the tool body 42. In the preferred embodiment, the angle α is seven degrees. A flat land 68 is formed around the upper edge of the insert 64. The land 68 is perpendicular to the tool body top surface 66. Because the insert 64 is canted relative to the tool body 42, the cutting edge of the insert 64 also forms an angle of α with the tool body top surface. Thus, the cutting tip 65 of the insert 64 is maintained tangent to the surface of the face of the vehicle wheel. The land 68 has a width W that is in the range of between 0.076 and 0.254 mm with the preferred embodiment having a width in the range of 0.076 to 0.127 mm. The lower portion 69 of the insert 64 and the tool body 42 are undercut at an angle β to allow removal of the cut material. The angle β is in the range of five to 15 degrees and is five degrees in the preferred embodiment.

Similar to the poly crystalline insert 40 described above, the present invention contemplates that, in the preferred embodiment, the feed rate per revolution for a wheel lathe utilizing the tool 60 having the mono crystalline insert 64 is less that the cutting tip radius R.

The invention also contemplates applying a mono crystalline coating to a substrate to form the tool insert (not shown). The inventors believe that either a diamond or ceramic coating may be utilized. The coating would be applied either before or after the geometry of the cutting tip is formed.

The invention further contemplates applying a layer of clear coating over the entire outboard surface of the wheel to include the chrome plated portion (not shown); however, this step is optional.

The principle and mode of operation of this invention have been explained and illustrated in its preferred embodiments. However, it must be understood that this invention may be practiced otherwise than as specifically disclosed without departing from the scope of the invention, as defined by the claims. For example, while the preferred embodiment has been described for a one piece vehicle wheel, it will be appreciated that the invention also can be practiced upon two piece vehicle wheels having cast full face modular wheel discs. Also, the invention can be practiced upon a wheel spider which is disposed within a wheel rim.

## Claims

1. A process for forming a decorative surface upon an outboard surface (31) of a wheel disc (33), the method comprising the steps of:
(a) providing a cutting tool (60) for smoothing a wheel surface that includes a rhombic shaped body portion (42) having a mounting aperture (43) formed therethrough and an insert (64) formed from or coated with a monocrystalline material having a cutting tip (65) carried upon one end of the body portion (42), the insert (64) having arcuate leading and trailing edges (R), the leading edge having a leading edge radius and the trailing edge having a trailing edge radius with the leading edge radius being equal to the trailing edge radius, the insert (64) also having a zero degree land (68) formed thereabout whereby the cutting edge of the insert (64) is maintained tangent to the wheel surface (31);
(b) mounting a machined vehicle wheel (30) including a wheel rim (32) and having a wheel disc (33) extending radially across the wheel rim upon a lathe;
(c) rotating the wheel;
(d) urging the cutting tool (60) provided in step (a) with a uniform pressure against an outboard surface (31) of the wheel disc (33) and traversing the cutting tool (60) in a radial direction across the outboard surface (31) of the wheel disc (33) to smooth at least a portion of the outboard wheel disc surface (31) such that the smoothed portion of the wheel disc outboard surface (31) has a polished appearance; and
(e) chrome plating (50) the smoothed portion of the outboard wheel surface (31).

2. A process according to claim 1 wherein the entire outboard face (31) of the wheel disc (33) is smoothed in step (d).

3. A process according to claim 1 further including, subsequent to step (d), applying a protective coating to the chrome plated surface.

4. A process according to claim 3 wherein the coating is a clear coating.

5. A process according to claim 1 wherein step (d) includes a rate of feed for the wheel lathe that is less than the leading edge radius of the cutting tool (60).

6. A process according to claim 5 wherein step (d) includes a rate of feed for the wheel lathe that is one tenth of the leading edge radius of the cutting tool (60).

7. A process according to claim 5 wherein step (d) includes a rate of feed for the wheel lathe that is less than one tenth of the leading edge radius of the cutting tool (60).

8. A process according to any preceding claim wherein the end of the cutting tool body (42) adjacent to the tip (65) is undercut by an angle in the range of 5 to 15 degrees.

9. A process according to claim 8 wherein the cutting tool (60) undercut is 5 degrees.

10. A process according to claim 8 further including a tool holder (41) formed from an anti-vibration material.

11. A process according to claim 9 wherein the cutting tool insert (64) is canted relative to a surface of the cutting tool body (42).

12. A process for forming a decorative surface upon an outboard surface (31) of a wheel disc (33), the method comprising the steps of:
(a) providing a cutting tool (60) for smoothing a wheel surface that includes a rhombic shaped body portion (42) having a mounting aperture (43) formed therethrough and an insert (64) formed from or coated with a monocrystalline material having a cutting tip (65) carried upon one end of the body portion (42), the insert (64) having arcuate leading and trailing edges, the leading edge having a leading edge radius and the trailing edge having a trailing edge radius with the leading edge radius being equal to the trailing edge radius, the insert (64) also having a zero degree land (68) formed thereabout whereby the cutting edge (65) of the insert (64) is maintained tangent to the wheel surface (31);
(b) mounting a machined vehicle wheel (30) including a wheel rim (32) and having a wheel disc (33) extending radially across the wheel rim upon a lathe;
(c) rotating the wheel;
(d) urging the cutting tool (60) provided in step (a) with a uniform pressure against an outboard surface (31) of the wheel disc (33) and traversing the cutting tool (40) in a radial direction across the outboard surface (31) of the wheel disc (33) such that a portion of the wheel disc outboard surface (31) is smoothed and has a polished appearance;
(e) removing the wheel (30) from the lathe;
(f) applying a coating of an electrically non-conductive material to the portion of the wheel face surface (31) that was not smoothed in step (d); and
(g) chrome plating the portion of the wheel with the coating of electrically non-conductive material preventing adhesion of the chrome plating chemicals to the surface of the wheel such that only the portions smoothed in step (d) are chrome plated.

13. A process according to claim 12 wherein the coating of electrically non-conductive material applied in step (f) is a paint.

14. A process according to claim 13 wherein the paint applied in step (f) includes an inert ingredient.

15. A process according to claim 12 wherein the coating of electrically non-conductive material applied in step (f) is a clear coating.

16. A process according to claim 15 wherein the clear coating applied in step (f) includes an inert ingredient.

17. A process according to claim 13 wherein the coating of electrically non-conductive material applied in step (f) includes a first layer of paint and a second layer of clear coat with the second layer covering the first layer.

## Patentansprüche

1. Verfahren zum Ausbilden einer dekorativen Oberfläche auf der Außenseite (31) einer Radscheibe (33), umfassend die Schritte:
a) das Bereitstellen eines Schneidwerkzeugs (60) zum Glätten einer Radoberfläche, das einen rautenförmigen Körperabschnitt (42) enthält, der eine Befestigungsöffnung (43) hat, die darin ausgebildet ist, und einen Einsatz (64), der aus einem Einkristallmaterial hergestellt ist oder damit beschichtet ist, und der eine Schneidspitze (65) an einem Ende des Körperabschnitts (42) aufweist, wobei der Einsatz (64) gebogene Vorder- und Hinterkanten (R) aufweist, und die Vorderkante einen Vorderkantenradius besitzt und die Hinterkante einen Hinterkantenradius besitzt, wobei der Vorderkantenradius gleich dem Hinterkantenradius ist, und der Einsatz (64) auch eine Fase (68) mit null Grad aufweist, die um ihn herum ausgebildet ist, wodurch die Schneidkante des Einsatzes (64) tangential zur Radoberfläche (31) gehalten wird;
b) das Montieren eines bearbeiteten Fahrzeugrads (30), das eine Radfelge (32) enthält und eine Radscheibe (33) aufweist, die sich radial über die Radfelge erstreckt, auf einer Drehbank;
c) das Versetzen des Rads in Drehung;
d) das Drücken des im Schritt a) bereitgestellten Schneidwerkzeugs (60) mit einem gleichförmigen Druck gegen die Außenseite (31) der Radscheibe (33) und das Führen des Schneidwerkzeugs (60) in radialer Richtung über die Außenseite (31) der Radscheibe (33), damit zumindest ein Teil der äußeren Radscheibenoberfläche (31) so geglättet wird, dass der geglättete Teil der Radscheibenaußenseite (31) ein poliertes Aussehen aufweist; und
e) das Beschichten (50) des geglätteten Abschnitts der Radaußenseite (31) mit Chrom.

2. Verfahren nach Anspruch 1, wobei die gesamte Außenseite (31) der Radscheibe (33) im Schritt d) geglättet wird.

3. Verfahren nach Anspruch 1, zudem umfassend nach dem Schritt d) das Aufbringen eines schützenden Überzugs auf der chrombeschichteten Oberfläche.

4. Verfahren nach Anspruch 3, wobei der Überzug ein klarer Überzug ist.

5. Verfahren nach Anspruch 1, wobei der Schritt d) eine Vorschubrate für die Raddrehbank umfasst, die kleiner ist als der Vorderkantenradius des Schneidwerkzeugs (60).

6. Verfahren nach Anspruch 5, wobei der Schritt d) eine Vorschubrate für die Raddrehbank umfasst, die ein Zehntel des Vorderkantenradius des Schneidwerkzeugs (60) beträgt.

7. Verfahren nach Anspruch 5, wobei der Schritt d) eine Vorschubrate für die Raddrehbank umfasst, die kleiner ist als ein Zehntel des Vorderkantenradius des Schneidwerkzeugs (60).

8. Verfahren nach irgendeinem vorhergehenden Anspruch, wobei das Ende des Schneidwerkzeugkörpers (42) benachbart zur Spitze (65) um einen Winkel im Bereich von 5 bis 15 Grad hinterschnitten ist.

9. Verfahren nach Anspruch 8, wobei die Hinterschneidung des Schneidwerkzeugs (60) 5 Grad beträgt.

10. Verfahren nach Anspruch 8, zudem umfassend einen Werkzeughalter (41), der aus einem schwingungsdämpfenden Material hergestellt ist.

11. Verfahren nach Anspruch 9, wobei der Schneidwerkzeug-Einsatz (64) gegen eine Oberfläche des Schneidwerkzeugkörpers (42) geneigt ist.

12. Verfahren zum Ausbilden einer dekorativen Oberfläche auf der Außenseite (31) einer Radscheibe (33), umfassend die Schritte:
a) das Bereitstellen eines Schneidwerkzeugs (60) zum Glätten einer Radoberfläche, das einen rautenförmigen Körperabschnitt (42) enthält, der eine Befestigungsöffnung (43) hat, die darin ausgebildet ist, und einen Einsatz (64), der aus einem Einkristallmaterial hergestellt ist oder damit beschichtet ist, und der eine Schneidspitze (65) an einem Ende des Körperabschnitts (42) aufweist, wobei der Einsatz (64) gebogene Vorder- und Hinterkanten aufweist, und die Vorderkante einen Vorderkantenradius besitzt und die Hinterkante einen Hinterkantenradius besitzt, wobei der Vorderkantenradius gleich dem Hinterkantenradius ist, und der Einsatz (64) auch eine Fase (68) mit null Grad aufweist, die um ihn herum ausgebildet ist, wodurch die Schneidkante (65) des Einsatzes (64) tangential zur Radoberfläche (31) gehalten wird;
b) das Montieren eines bearbeiteten Fahrzeugrads (30), das eine Radfelge (32) enthält und eine Radscheibe (33) aufweist, die sich radial über die Radfelge erstreckt, auf einer Drehbank;
c) das Versetzen des Rads in Drehung;
d) das Drücken des im Schritt a) bereitgestellten Schneidwerkzeugs (60) mit einem gleichförmigen Druck gegen die Außenseite (31) der Radscheibe (33) und das Führen des Schneidwerkzeugs (40) in radialer Richtung über die Außenseite (31) der Radscheibe (33), damit ein Teil der äußeren Radscheibenoberfläche (31) geglättet wird und ein poliertes Aussehen aufweist;
e) das Abnehmen des Rads (30) von der Drehbank;
f) das Aufbringen eines Überzugs aus einem elektrisch nicht leitenden Material auf dem Teil der Radscheibenoberfläche (31), der im Schritt d) nicht geglättet wurde; und
g) das Beschichten des Teils des Rads mit Chrom, wobei der Überzug aus dem elektrisch nicht leitenden Material verhindert, dass die Chrombeschichtungs-Chemikalien an der Radoberfläche haften, so dass nur die im Schritt d) geglätteten Teile mit Chrom beschichtet werden.

13. Verfahren nach Anspruch 12, wobei der Überzug aus elektrisch nicht leitenden Material, der im Schritt f) aufgebracht wird, eine Farbe ist.

14. Verfahren nach Anspruch 13, wobei die im Schritt f) aufgebrachte Farbe einen reaktionsträgen Bestandteil enthält.

15. Verfahren nach Anspruch 12, wobei der im Schritt f) aufgebrachte Überzug aus dem elektrisch nicht leitenden Material eine klare Beschichtung ist.

16. Verfahren nach Anspruch 15, wobei die im Schritt f) aufgebrachte klare Beschichtung einen reaktionsträgen Bestandteil enthält.

17. Verfahren nach Anspruch 13, wobei der im Schritt f) aufgebrachte Überzug aus dem elektrisch nicht leitenden Material eine erste Schicht aus Farbe und eine zweite Schicht aus einem klaren Überzug enthält, wobei die zweite Schicht die erste Schicht bedeckt.

## Revendications

1. Procédé de fabrication d'une surface décorative sur une surface extérieure (31) d'un disque de roue (33), le procédé comprenant les étapes de :
(a) mettre à disposition un outil de coupe (60) pour lisser une surface d'une roue, qui comporte une partie de corps (42) en forme de losange avec une ouverture de montage (43) la traversant et un insert (64) formé en, ou plaqué avec, un matériau monocristallin ayant une pointe de coupe (65) portée à une extrémité de la partie de corps (42), l'insert (64) ayant des bords avant et arrière (R) arqués, le bord avant ayant un rayon de bord avant et le bord arrière ayant un rayon de bord arrière, le rayon de bord avant étant égal au rayon de bord arrière, l'insert (64) ayant également une zone à zéro degré (68) formé là-dessus, le bord de coupe de l'insert (64) étant maintenu tangent à la surface de la roue (31) ;
(b) monter sur un tour une roue de véhicule (30) usinée ayant une jante (32) et ayant un disque de roue (33) s'étendant radialement à travers la jante ;
(c) faire tourner la roue ;
(d) presser l'outil de coupe (60) mis à disposition à l'étape (a) avec une pression homogène contre une surface extérieure (31) du disque de roue (33) et faire traverser l'outil de coupe (60) dans une direction radiale à travers la surface extérieure (31) du disque de roue (33) pour lisser au moins une partie de la surface extérieure (31) du disque de roue de façon que la partie lissée de la surface extérieure (31) du disque de roue ait une apparence polie ; et
(e) plaquer au chrome (50) la partie lissée de la surface extérieure (31) de la roue.

2. Procédé selon la revendication 1, **caractérisé en ce que** la surface extérieure (31) entière du disque de roue (33) est lissée à l'étape (d).

3. Procédé selon la revendication 1, comprenant en outre, à la suite de l'étape (d), appliquer un revêtement de protection sur la surface plaquée au chrome.

4. Procédé selon la revendication 3, **caractérisé en ce que** le revêtement est un revêtement clair.

5. Procédé selon la revendication 1, **caractérisé en ce que** l'étape (d) comporte une vitesse d'avance pour le tour de la roue qui est inférieure au rayon du bord avant de l'outil de coupe (60).

6. Procédé selon la revendication 5, **caractérisé en ce que** l'étape (d) comporte une vitesse d'avance pour le tour de la roue qui est un dixième du rayon du bord avant de l'outil de coupe (60).

7. Procédé selon la revendication 5, **caractérisé en ce que** l'étape (d) comporte une vitesse d'avance pour le tour de la roue qui est inférieure à un dixième du rayon du bord avant de l'outil de coupe (60).

8. Procédé selon l'une quelconque des revendications précédentes, **caractérisé en ce que** l'extrémité du corps (42) de l'outil de coupe adjacente à la pointe (65) comporte une contre-dépouille de l'ordre de 5 à 15 degrés.

9. Procédé selon la revendication 8, **caractérisé en ce que** la contre-dépouille de l'outil de coupe (60) est de 5 degrés.

10. Procédé selon la revendication 8, comprenant en outre un porte-outil (41) formé en un matériau anti-vibrations.

11. Procédé selon la revendication 9, **caractérisé en ce que** l'insert (64) de l'outil de coupe est incliné par rapport à la surface du corps (42) de l'outil de coupe.

12. Procédé de fabrication d'une surface décorative sur une surface extérieure (31) d'un disque de roue (33), le procédé comprenant les étapes de :
(a) mettre à disposition un outil de coupe (60) pour lisser une surface d'une roue, qui comporte une partie de corps (42) en forme de losange avec une ouverture de montage (43) la traversant et un insert (64) formé en, ou plaqué avec, un matériau monocristallin ayant une pointe de coupe (65) portée à une extrémité de la partie de corps (42), l'insert (64) ayant des bords avant et arrière (R) arqués, le bord avant ayant un rayon de bord avant et le bord arrière ayant un rayon de bord arrière, le rayon de bord avant étant égal au rayon de bord arrière, l'insert (64) ayant également une zone à zéro degré (68) formé là-dessus, le bord de coupe de l'insert (64) étant maintenu tangent à la surface de la roue (31) ;
(b) monter sur un tour une roue de véhicule (30) usinée ayant une jante (32) et ayant un disque de roue (33) s'étendant radialement à travers la jante ;
(c) faire tourner la roue ;
(d) presser l'outil de coupe (60) mis à disposition à l'étape (a) avec une pression homogène contre une surface extérieure (31) du disque de roue (33) et faire traverser l'outil de coupe (60) dans une direction radiale à travers la surface extérieure (31) du disque de roue (33) pour lisser au moins une partie de la surface extérieure (31) du disque de roue de façon que la partie lissée de la surface extérieure (31) du disque de roue ait une apparence polie ;
(e) démonter la roue (30) du tour ;
(f) appliquer un revêtement en un matériau électriquement non conducteur sur la partie de la surface (31) de la roue qui n'a pas été lissée à l'étape (d) ; et
(g) plaquer au chrome la partie de la roue avec le revêtement en un matériau électriquement non conducteur empêchant l'adhésion des produits chimiques pour le plaquage au chrome sur la surface de la roue de façon qu'uniquement les parties lissées à l'étape (d) sont plaquées au chrome.

13. Procédé selon la revendication 12, **caractérisé en ce que** le revêtement en un matériau électriquement non conducteur appliqué à l'étape (f) est une peinture.

14. Procédé selon la revendication 13, **caractérisé en ce que** la peinture appliquée à l'étape (f) comprend un ingrédient inerte.

15. Procédé selon la revendication 12, **caractérisé en ce que** le revêtement en un matériau électriquement non conducteur appliqué à l'étape (f) est un revêtement clair.

16. Procédé selon la revendication 15, **caractérisé en ce que** le revêtement clair appliqué à l'étape (f) comprend un ingrédient inerte.

17. Procédé selon la revendication 13, **caractérisé en ce que** le revêtement en un matériau électriquement non conducteur appliqué à l'étape (f) comprend une première couche de peinture et une seconde couche d'un revêtement clair, la seconde couche recouvrant la première couche.
